# EUROPEAN PATENT APPLICATION

(11) **EP 3 387 967 A1**
(43) Date of publication of application: **17.10.2018**
(21) Application number: 17837129.0
(22) Date of filing: 19.01.2017
(51) Int. Cl.: A47J 36/02, B32B 27/20, B32B 27/08, B32B 15/08, B32B 27/32

(54) **METHOD FOR PRODUCING INTERMEDIATE MATERIAL FOR COOKING DEVICE AND INTERMEDIATE MATERIAL FOR COOKING DEVICE PRODUCED ACCORDING TO SAID MANUFACTURING METHOD**

(30) Priority: 04.08.2016 KR 20160099388
(71) Applicant: Korea Taconic Co., Ltd, Seongnam-si, Gyeonggi-do 13506 (KR)
(72) Inventor: LIM, Yong Mook, Seongnam-si Gyeonggi-do 13499 (KR); PARK, Kwan Yong, Cheonan-si Chungcheongnam-do 31199 (KR); JANG, Dae Jin, Cheonan-si Chungcheongnam-do 31164 (KR); OH, Sei Choong, Cheongju-si Chungcheongbuk-do 28768 (KR); HAN, Seung Hwan, Jeonju-si Jeollabuk-do 54832 (KR); CHOI, Ji Sook, Seongnam-si Gyeonggi-do 13506 (KR)
(74) Representative: RGTH
(86) International application number: PCT/KR2017/000637
(87) International publication number: WO 2018/026077

(57) **Abstract**

A method for producing an intermediate material for a cooking device according to an embodiment of the present invention comprises the steps of: repeating a cycle of applying a dispersion of a fluororesin and an inorganic filler or a dispersion of a fluororesin alone to a supporter (20) and firing the applied dispersion so as to form a multilayered fluororesin film (10), followed by exfoliating the multilayered fluororesin film from the supporter (20) to acquire the multilayered fluororesin film (10) beforehand; providing the pre-acquired fluororesin film (10) on a metal substrate (30); and thermally compressing the fluororesin film (10) and the metal substrate (30). In addition, an organic compound-containing primer or adhesive is not used in the thermocompression step.

## Description

### [Technical Field]

The present invention relates to a method for producing an intermediate material for a cooking device and an intermediate material for a cooking device produced according to the producing method. More particularly, the present invention relates to a method of producing an intermediate material for a cooking device, which includes preforming a multilayered fluororesin film, and an intermediate material for a cooking device produced according to the producing method.

### [Background Art]

As a related art which is the background of the present invention, reference is made to three patent documents published before the filing date of the present invention.

First, a technique disclosed in Japanese Patent Application Publication No. 2009-195276 will be introduced as a related art. The above-described Japanese Patent Document was filed by SUMITOMO ELEC FINE POLYMER INC., entitled "Fluororesin Coated Aluminum Plate and Heating Device for Cooking." In this Japanese patent document, a fluorine coating layer having a multilayer structure of a base layer, an intermediate layer, and an outermost layer was formed on a metal substrate such as an aluminum plate. It should be noted in this Japanese Patent Document that the fluorine coating layer having such a multilayer structure was produced by etching an aluminum plate, forming fine irregularities on a surface of the aluminum plate, applying a polytetrafluoroethylene (PTFE) dispersion, forming the base layer through heat treatment, forming the intermediate layer by applying a perfluoroalkoxy (PFA) powder and a dispersion of a filler onto the base layer and performing heat treatment thereon, and forming an outermost layer by applying a perfluoroalkoxy dispersion onto a surface of the intermediated layer and performing heat treatment thereon. The inventors of the present invention had found that, when the coating of fluororesin is performed in the manner disclosed in the above-described Japanese Patent Document, formation of pinholes cannot be excluded by a volatile component contained in a fluorine coating agent. When a coating defective such as a pinhole occurs, there occur problems in that releasability is degraded at that portion and useful life of a cooking device is shortened.

Next, a technique disclosed in Japanese Patent Application Publication No. 2001-218684 will be introduced as a related art. The above-described Japanese Patent Document was filed by OSAKA GAS CO LTD., entitled "Member for Cooking device and Cooking device." In the above-described Japanese Patent Document, three fluororesin-containing coating layers are formed on a metal substrate such as an aluminum plate. It should be noted that the above-described Japanese Patent Document employs a method of forming irregularities on a base substrate, and sequentially coating three layers with a fluororesin-containing paint using spray coating or the like, thereby forming the three fluororesin-containing coating layers. Further, in the above-described Japanese Patent Document, toluene, benzene, xylene, tetrahydrofuran, acetone, or the like is used as a solvent of a coating agent as well as an organic binder such as polyimide (PI), polyphenylene sulfide (PPS), polyethersulfone (PES), or the like is used as the solvent. The above-described solvent is used in the coating agent and thus possibility of occurrence of a pinhole may be high, and the above-described organic binder is used and thus there may occur a problem of discoloration or the like when the above-described organic binder is heated at a high temperature.

Finally, as a related art, a technique disclosed in Japanese Patent Application Publication No. 2007-313871 will be introduced. The above-described Japanese Patent Document was filed by Laminate Industry Co., Ltd., entitled "Laminated Metal Plate Manufacturing Method and Laminated Metal Plate Produced by The Same." In the above-described Japanese Patent Document, a fluororesin film is bonded to a metal plate through a method shown in FIG. 1. More specifically, the above-described Japanese Patent Document discloses a method of heating a metal plate 3 by flames 4 and 5 and pressing and bonding the heated metal plate 3 and a fluororesin film 2 through a roller 6. However, it is difficult to uniformly maintain a temperature of the roller 6 in such direct heating type flame treatment. Therefore, a bonding deviation in the pressing process of the roller 6 may occur. Further, in the above-described Japanese Patent Document, a method of bonding the preformed fluororesin film 2 to the metal plate 3 was employed, but a preforming of a fluororesin film and a fluororesin structure of the present invention were not disclosed.

### [Disclosure]

### [Technical Problem]

The present invention has been made to resolve the above-described problems of the related art, and it is an objective of the present invention to provide a method for producing an intermediate material for a cooking device, which includes preforming a multilayered fluororesin film in which probability of occurrence of a pinhole is prevented during forming a multilayered fluororesin on a metal substrate, and an intermediate material for a cooking device produced according to the method.

Further, it is another objective of the present invention to provide a method for producing an intermediate material for a cooking device, which is capable of achieving a strong bonding between a metal substrate and a fluororesin film without using an organic compound-containing primer or adhesive in a process of thermally compressing a multilayered fluororesin film on the metal substrate, and an intermediate material for a cooking device produced according to the method.

Furthermore, it is still another objective of the present invention to provide an optimal process condition for thermal compression of a preformed fluororesin film on a metal substrate, and at the same time, provide a structure of a fluororesin film capable of exhibiting optimal releasability, heat resistance, chemical resistance, and abrasion resistance when the fluororesin film is produced as a cooking device.

### [Technical Solution]

A typical configuration of the present invention for achieving the above-described objectives is as follows.

According to one aspect of the present invention, there is provided a method for producing an intermediate material for a cooking device, the method including preforming a multilayered fluororesin film (10) by repeating applying and firing an aqueous dispersion of fluororesin and an inorganic filler or an aqueous dispersion of fluororesin onto a supporter (20) to form the multilayered fluororesin film (10) and exfoliating the formed multilayered fluororesin film (10) from the supporter (20), providing the preformed fluororesin film (10) on a metal substrate (30), and thermally compressing the preformed fluororesin film (10) and the metal substrate (30). An organic compound-containing primer or adhesive may not be used in the thermally compressing.

According to the method for producing an intermediate material for a cooking device, the preforming of the multilayered fluororesin film (10) may include coating and firing an aqueous dispersion of a mixture of fluororesin having excellent flowability and polytetrafluoroethylene (PTFE) onto the supporter (20) as a first layer, coating and firing an aqueous dispersion of a mixture of one or more among PTFE, tetrafluoroethylene-hexafluoropropylene copolymer (FEP), tetrafluoroethylene-perfluoroalkyl vinyl ether (PFA), tetrafluoroethylene-perfluoropropyl vinyl ether copolymer (TFM), and polytetrafluoroethylene-perfluoromethyl vinyl ether copolymer (MFA), and a mixture of an inorganic filler having a content of 5 to 50% by volume as a second layer, and coating and firing an aqueous dispersion of a mixture of PTFE and an inorganic filler having a content of 25% or less by volume as a third layer.

The coating of the fluororesin aqueous dispersion may include dipping the supporter (20), wherein the fluororesin aqueous dispersion may be coated on both surfaces of the supporter (20) by dipping.

The thermally compressing may perform compression while heating a flat-type press plate, or while heating a press including two rollers.

When the thermally compressing performs compression while heating a flat-type press plate, the flat-type press plate may be preferably heated to maintain a temperature in a range of 300 °C to 410 °C and a pressure in a range of 100 psi and 800 psi may be preferably applied.

When the thermally compressing performs compression while heating the press including the two rollers, the two rollers of the press are respectively preferably heated to maintain a temperature in a range of 330 °C to 420 °C, and a pressure in a range of 2 MPa to 15 MPa may be preferably applied, and a line speed in a range of 0.2 to 5 m/min may be applied.

It should be noted that an intermediate material for a cooking device produced according to the above-described method of producing an intermediate material for a cooking device falls within the scope of the present invention.

### [Advantageous Effects]

In accordance with the present invention, there are provided a method for producing an intermediate material for a cooking device, which includes preforming a multilayered fluororesin film in which probability of occurrence of a pinhole is prevented during forming a multilayered fluororesin on a metal substrate, and an intermediate material for a cooking device produced according to the method. When a pinhole occurs, a smell is fed into a cooking device, and moisture infiltrated during heating of a cooking device volatilizes or corrosion resistance is degraded due to infiltration of a salt component to cause delamination of a coating film, such that there are problems in that releasability of the cooking device is degraded and bacteria is bred, but in accordance with the present invention, an excellent action effect is provided to eliminate probability of occurrence of the pinhole.

Further, in accordance with the present invention, there are provided a method for producing an intermediate material for a cooking device, which is capable of achieving a strong bonding between a metal substrate and a fluororesin film without using an organic compound-containing primer or adhesive in a process of thermal compressing a multilayered fluororesin film on the metal substrate, and an intermediate material for a cooking device produced according to the method. The above-described organic compound-containing primer or adhesive has a probability of thermal decomposition, and thus there is a problem in degradation of heat resistance. In accordance with the present invention, since the use of the organic compound-containing primer or adhesive is basically excluded, the problem in degradation of heat resistance is eliminated and an excellent action effect of improving safety of a cooked food occurs.

Further, in accordance with the present invention, there are provided an optimal process condition for thermal compression of a preformed fluororesin film on a metal substrate, and at the same time, a structure of a fluororesin film capable of exhibiting optimal releasability, heat resistance, chemical resistance, and abrasion resistance when the fluororesin film is produced as a cooking device.

### [Description of Drawings]

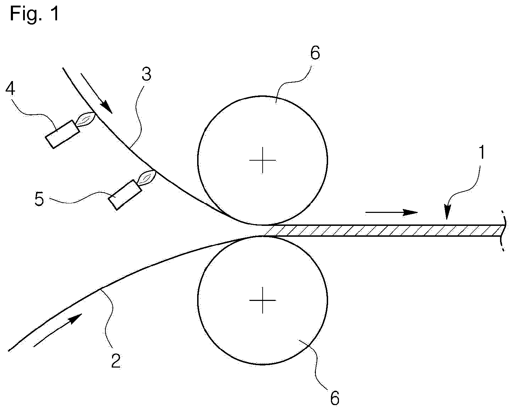

FIG. 1 is a diagram illustrating a compression bonding method of a fluororesin film disclosed in Japanese Patent Application Publication No. 2007-313871, which is one of related arts.
FIG. 2 is a diagram illustrating a production process of preforming a multilayered fluororesin film according to one embodiment of the present invention.
FIG. 3 is a diagram illustrating a production process of thermally compressing the multilayered fluororesin film, which is formed according to one embodiment of the present invention, onto a metal substrate.
FIG. 4 is a diagram illustrating a structure of the multilayered fluororesin film formed according to one embodiment of the present invention.
FIG. 5 is photographs showing test results whether a pinhole is formed with respect to a cooking device, which is formed according to one embodiment of the present invention, and two control groups.
FIG. 6 is photographs showing enlargement and observation by an electron microscope whether a pinhole is formed with respect to the cooking device, formed according to one embodiment of the present invention, and two control groups.

### [Modes of the Invention]

Hereinafter, preferred embodiments of the present invention will be fully described in a detail which is suitable for implementation by those skilled in the art to which the present invention pertains with reference to the accompanying drawings.

In order to clearly describe the present invention, a portion not related to the present invention will be omitted, and throughout this disclosure, like reference numerals will be assigned to like components. Further, a size and the like of each component shown in the drawings are arbitrarily illustrated for convenience of description, and thus the present invention is not necessarily limited to those shown in the drawings.

That is, it should be noted that specific shapes, structures, and features described herein can be changed and implemented from one embodiment to another embodiment without departing from the spirit and scope of the present invention, and a position or an arrangement of each component can also be changed without departing from the spirit and scope of the present invention. Accordingly, the following detailed description is not to be taken in a limiting sense, and the scope of the present invention should be construed to include the scope of the appended claims and equivalents thereof.

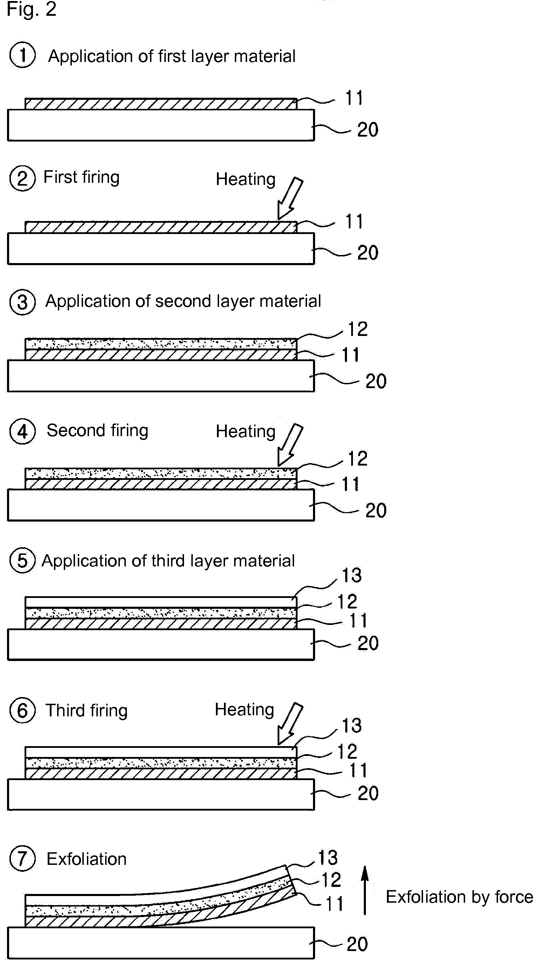

FIG. 2 is a diagram illustrating a production process of preforming a multilayered fluororesin film according to one embodiment of the present invention. One of the representative features of the present invention is to preform the multilayered fluororesin film instead of directly forming a fluororesin layer on a metal substrate constituting a main body of a cooking device, and FIG. 2 conceptually illustrates such a process.

Fluororesin is a generic term for a resin containing fluorine in a molecule, and there are various types exemplified herein including polytetrafluoroethylene (PTFE). Generally, fluororesin has been widely used as a coating agent for a cooking device because of having excellent heat resistance, chemical resistance, and low friction coefficient as well as properties of no adhesion and stickiness.

It is known that PTFE which is the most representative fluororesin has poor workability and flowability because PTFE has a melting point of 320 °C or higher and decomposition thereof starts at a temperature of about 450 °C.

As a method of producing fluororesin as a film, there is a method of using fluororesin having improved workability and flowability of PTFE, melting and extruding the fluororesin, and extracting the fluororesin in the form of a film. However, in such a method, it has been commercially limited to form a fluororesin film in multiple layers at one time. Further, there is skiving in which PTFE was formed in the form of a billet and then a surface thereof was cut to form a film, and in this method, formation of a multilayered film was impossible as well as it was commercially limited to contain an inorganic filler with an appropriate ratio. This is because, when a content of the inorganic filler is increased, the billet is broken during the forming of the billet.

In the process according to the embodiment of the present invention shown in FIG. 2, a supporter is provided first. A supporter 20 in the process of FIG. 2 should be distinguished from the term metal substrate 30 used herein. The metal substrate 30 refers to a metal such as an aluminum plate which forms a main body of a cooking device, and the supporter 20 in the embodiment of FIG. 2 is a component which is used in only an intermediate process so as to form a multilayered fluororesin film 10 when the supporter 20 is thermally compressed on the metal substrate. When the formation of the multilayered fluororesin film 10 is completed, the multilayered fluororesin film 10 is exfoliated from the supporter 20 and is put onto the metal substrate in a bonding process as a subsequent process. The supporter 20 may be made of a synthetic resin such as polyimide or may be made of a metal.

After the supporter 20 is provided, an aqueous dispersion containing fluororesin, which will be a first layer 11 of the fluororesin film 10, is applied onto the supporter 20. Next, firing is performed. The firing includes heating the supporter 20, which is coated with the fluororesin first layer 11, to a temperature in the range of approximately 350 °C to 450 °C (but the present invention is not limited to this temperature range). During the heating, distilled water is removed from the dispersion, and fluororesin dispersed in the distilled water in the form of small particles is bound to the supporter 20. After the firing is performed, an aqueous dispersion containing fluororesin, which will be a second layer 12, is applied onto the fluororesin first layer 11 bonded onto the supporter 20, and then second firing is performed. After the second firing is completed, an aqueous dispersion containing fluororesin, which will be a third layer 13 of the fluororesin film, is applied onto the fluororesin second layer 12, and then third firing is performed. In the embodiment of FIG. 2, since the fluororesin film 10 made of three layers is formed, the applying and firing of the fluororesin aqueous dispersion are respectively performed three times, but the present invention is not limited thereto, and the number of times of the applying and the firing may be varied according to the number of layers and a thickness of the fluororesin film 10 which will be preformed.

In the present invention, it has been discovered through repeated experiments by the inventors that, when the film layer is formed with a thickness in the range of 2 µm to 25 µm by a cycle of applying and firing the aqueous dispersion, it is effective for achieving a pinhole removal effect. More preferably, when the film layer is formed with a thickness in the range of 5 µm to 10 µm by the cycle of applying and firing the aqueous dispersion, it is effective for achieving a pinhole removal effect.

It should be understood in conjunction with FIG. 2 of the present invention that, in the process according to the present invention, the multilayered fluororesin film 10, which will be thermally compressed onto the metal substrate, is formed by repeating applying and firing of a dispersion instead of forming and bonding a plurality of films, each of which is made of a single layer, through thermo compression to form a multilayered fluororesin film. That is, the process according to the present invention is performed such that a single multilayered fluororesin film 10 is preformed and is thermally compressed onto the metal substrate 30 instead of preparing the number of fluororesin films corresponding to the number of fluororesin layers, which will be formed on the metal substrate 30, and bonding the prepared fluororesin films to the metal substrate. The process according to the present invention has an advantage in that bonding deviation may be relatively reduced compared with a method of preforming a plurality of films when thermo compression is performed on the metal substrate, and the process may be simplified.

As shown in FIG. 2, when firing for a final layer is completed, the fluororesin film 10 is exfoliated from the supporter 20.

The process shown in FIG. 2 may be replaced by a process capable of forming two film layers at one time while having a common feature of preforming the single multilayered fluororesin film 10 and including dipping which is advantageous in terms of a pinhole removal.

In the process including dipping and capable of replacing the process shown in FIG. 2, the supporter 20 may be dipped into a container in which the fluororesin aqueous dispersion is stored, and a fluororesin layer is formed at both sides of the supporter 20 by such dipping. Dipping is followed by firing. When composition of the aqueous dispersion is changed when dipping is performed, multilayer fluorine films having different components may be formed in a single fluororesin film 10.

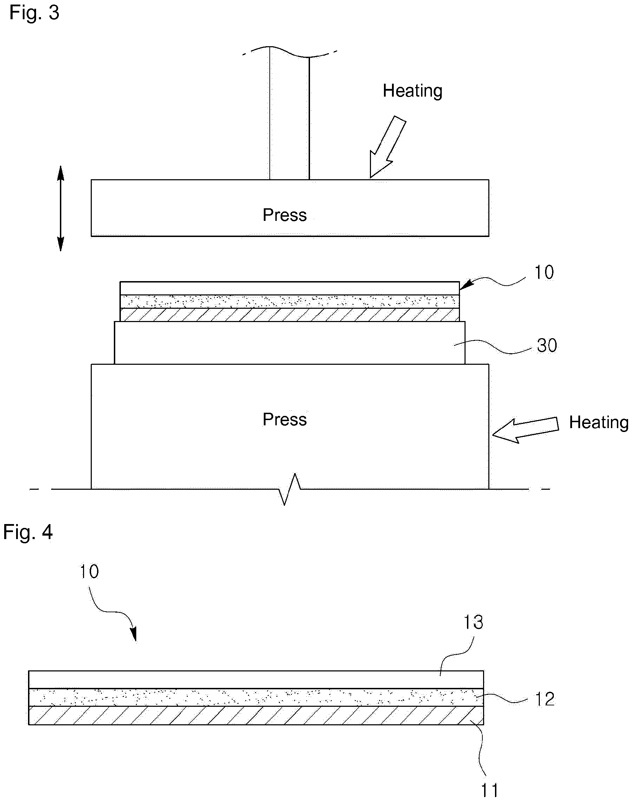

FIG. 3 is a diagram illustrating a production process of thermally compressing the multilayered fluororesin film 10, which is formed according to one embodiment of the present invention, onto the metal substrate 30.

The metal substrate 30 may be made of one material selected from aluminum, an aluminum alloy, copper, magnesium, aluminum-plated steel, iron, stainless steel, and the like, or may be made of a clad material in which two or more metal plates among aluminum, an aluminum alloy, copper, magnesium, aluminum-plated steel, iron, stainless steel, and the like are rolled, but the present invention is not limited to the described above.

Further, the metal substrate 30 may be pretreated before the bonding process with the multilayered fluororesin film 10. The surface pretreatment of the metal substrate 30 may be performed by physical methods such as sand blasting, brushing, polishing, and hairline brushing, and chemical methods such as etching, anodizing, chemical conversion treatment, and phosphating, but the surface pretreatment is not limited thereto. It should be understood that a thickness of the metal substrate 30 is chosen to be suitable for use as a cooking device and that any thickness of the metal substrate 30 may be produced without departing from the scope of the present invention.

In the process of the present invention shown in the embodiment of FIG. 3, the metal substrate 30 is provided in the form of a flat-type plate. A multilayered fluororesin film 10, which is formed as shown in FIG. 2 and described in the related disclosure, is placed on the metal substrate 30 which is provided in the form of a flat-type plate. Thereafter, a press thermally compresses the multilayered fluororesin film 10 onto the metal substrate 30.

In addition to the press process shown in FIG. 3, a roll-to-roll process is also applicable.

In application of a method for producing an intermediate material for a cooking device, which includes preforming a multilayered fluorine film and thermally compressing the multilayered fluorine film onto a metal substrate, the inventors of the present invention have performed repetitive experiments so as to discover an optimal operating condition of the above-described flat-type plate press process or the roll-to-roll process including two rollers, thereby deriving the following operating condition.

First, in terms of conditions for excellent compression and productivity between the multilayered fluororesin film 10 and the metal substrate 30, it has been discovered for an optimal operating condition in the flat-type plate press process that a press pressure set in the range of 100 to 800 psi is applied while heat is applied to maintain a temperature in the range of 300 °C to 410 °C.

Next, in terms of conditions for excellent compression and productivity between the multilayered fluororesin film 10 and the metal substrate 30, it has been discovered for an optimal operating condition in the roll-to-roll process including two rollers that a temperature in the range of 330 °C to 420 °C, a pressure in the range of 2 to 15 MPa, and a line speed in the range of 0.2 to 5 m/min are applied.

The flat-type plate press process and the roll-to-roll process are different in thickness of a producible metal substrate 30 of the intermediate material for a cooking device. In the roll-to-roll process, since the preformed multilayer fluororesin film is thermally compressed onto a surface of the metal substrate 30 while the metal substrate 30 is rolled between two rollers, there is a limitation in that it is difficult to thermally compress the multilayered fluororesin film 10 onto the surface of the thick metal substrate 30. Therefore, it is preferable to apply a flat-type plate press process when a thick metal substrate 30 having a thickness of about 2 mm or more is used.

As shown in FIGS. 2 and 3 and described in the related portions of this disclosure, there is provided an intermediate product for a cooking device, of which the multilayered fluororesin film 10 is thermally compressed on the metal substrate 30 which will form a main body of the cooking device. The intermediate product may be transferred from the press mechanism or the roll-to-roll mechanism described in the process of FIG. 3 to a cutting mechanism which is not shown. The intermediate product for a cooking device, of which the multilayered fluororesin film 10 is thermally compressed on the metal substrate 30 which will form the main body of the cooking device, may be cut into a rectangular shape or a circular shape. In the cutting process, the intermediate product is cut according to a shape of the cooking device which is a final product, and when the final product is a domestic frying pan, the intermediate product may be cut into a plurality of circular plates, and when the final product is a commercial frying pan, the intermediate product may be cut into a plurality of rectangular plates. The intermediate product after the cutting is completed has a shape of a final cooking device by a subsequent press process. Thereafter, a handle and the like are attached, inspection is performed, and then the cooking device which is the final product is released.

FIG. 4 is a diagram illustrating a structure of the multilayered fluororesin film 10 formed according to a preferred embodiment of the present invention.

The multilayered fluororesin film 10 shown in FIG. 4 is configured with three layers. From the order close to the metal substrate, a first layer 11 is made of a mixture of fluororesin having excellent flowability and PTFE. A second layer 12 is made of fluororesin with a content of inorganic filler 5 to 50% by volume. A third layer 13 is made of PTFE with a content of inorganic filler 25% or less by volume.

As the first layer 11 of the multilayered fluororesin film 10 included in the cooking apparatus according to the embodiment of the present invention shown in FIG. 4, one among tetrafluoroethylene-hexafluoropropylene copolymer (FEP), tetrafluoroethylene-perfluoroalkyl vinyl ether (PFA), tetrafluoroethylene-perfluoropropyl vinyl ether copolymer (TFM), and polytetrafluoroethylene-perfluoromethyl vinyl ether copolymer (MFA), or a mixture of two or more thereamong may be used as the fluororesin having excellent flowability, but the present invention is not limited thereto.

In the case of the first layer 11 which is thermally compressed onto the metal substrate 30, fine irregularities on the surface of the metal substrate 30 should be filled with fluororesin so as to maintain an adhesive power with the metal substrate 30. However, since PTFE has a melt viscosity of 10¹⁰ to 10¹¹ poise or more at a temperature condition above a melting temperature, that is, at a temperature of about 370 °C or higher, PTFE has almost no flowability, whereas the exemplified fluororesins having excellent flowability may flow with a melt viscosity in the range of 10³ to 10⁶ poise at a temperature of about 370 °C or higher, such that the fine irregularities on the surface of the metal substrate may be filled with the exemplified fluororesins. However, in recent years, a usage temperature of the cooking device tends to gradually increase, and it is preferable to use fluororesin having a melting point of 250 °C or higher among fluororesins having excellent flowability.

As the second layer 12 of the multilayered fluororesin film 10 included in the cooking apparatus according to the embodiment of the present invention shown in FIG. 4, one among PTFE, FEP, PFA, TFM, and MFA, or a mixture of two or more thereamong may be used as the fluororesin, but the present invention is not limited thereto.

The inorganic filler contained in the second layer 12 and the third layer 13 of the multilayered fluororesin film 10 included in the cooking device according to the embodiment of the present invention shown in FIG. 4 may be selected from one or more among talc, mica, carbon black, graphite, titanium dioxide, artificial diamond, alumina, silica, zinc oxide, magnesium oxide, a glass bead, a glass bubble, and a carbon nanotube, but the present invention is not limited thereto.

The inorganic filler is contained in the fluororesin of the second layer 12, which is the intermediate layer of the preformed multilayered fluororesin film of the present invention, for the purpose of implementing a color or improving scratch resistance by alleviating an external physical impact, and thus there is an effect of improving thermal conductivity.

The third layer 13, that is, an outermost layer of the multilayered fluororesin film 10 included in the cooking device according to the embodiment of the present invention shown in FIG. 4 is made of PTFE having a content of an inorganic filler 25% or less by volume. In the present invention, the outermost layer is made of only PTFE among fluororesins excluding a mixture of PTFE and other type of fluororesin, or another type of fluororesins excluding PTFE.

The inventors have observed a phenomenon in that, as the content of an inorganic filler increases, scratch resistance of a surface of the outermost layer may be somewhat improved, but releasability is significantly degraded, and have discovered that the content of the inorganic filler is preferably limited to 25% or less. Further, it has been determined that, when the content of inorganic filler in the outermost layer is 0%, that is, the outermost layer is made of pure PTFE, releasability tends to be maintained at a certain level or more even after long usage.

PTFE is a material having excellent releasability, chemical resistance, and heat resistance, and has properties suitable for the outermost layer among fluororesin layers which will be coated on a metal substrate of the cooking device. However, such PTFE has no flowability and is not sufficiently adhered to a substrate, so that PTFE has been mostly applied in the form of a liquid paint or a powder paint in the prior art, and in this case, the formation of the pinhole could not be prevented.

In order to prevent the formation of the pinhole, even though PTFE is applied in the form of a preformed film instead of being formed on a metal substrate in the form of a liquid paint or a powder paint, it was very difficult to form PTFE as a film in an extrusion method. To apply the extrusion method, fluororesin should undergo a melting process, but PTFE has a very high melting point and the melting point (a temperature of about 320 °C) is close to a temperature at which decomposition starts (a temperature of about 450 °C), and thus a commercially available process of extruding and extracting PTFE in a molten state was limited. Only fluororesin having improved flowability has been applied in a commercial extrusion process (see the above-described fluororesin types usable as the first layer of the embodiment of FIG. 4), but a film made of such fluororesin has a problem in that a melting point is low and thus heat resistance is degraded.

Further, it has been possible to form PTFE as a film in the above-described skiving process. However, when the skiving process is used, it is impossible to produce a multilayered PTFE film, and thus the content of the inorganic filler is inevitably limited.

As described above, in the prior art, a method of forming a film layer containing an inorganic filler by extrusion, forming a film layer of PTFE by skiving, and then thermally compressing these two different films onto a metal substrate is theoretically possible, but as described above, this method has an inevitable problem in that bonding deviation becomes larger and a process becomes complicated when thermo compression is performed onto the metal substrate compared with the method of the present invention.

There is a technical meaning in that the process according to the present invention is a process of using a preformed film which suppresses formation of a pinhole, varying a content of the inorganic filler in each of layers due to a multilayered structure, and using PTFE as an outermost layer of the multilayered fluororesin film 10 which is coated on the metal substrate.

The present inventors have discovered through repetitive experiments that a thickness of the multilayered fluororesin film 10 is preferably formed in the range of 20 to 300 µm, more preferably 20 to 80 µm, and at this point, a thickness of the outermost layer is preferably formed in the range of 5 to 50 µm.

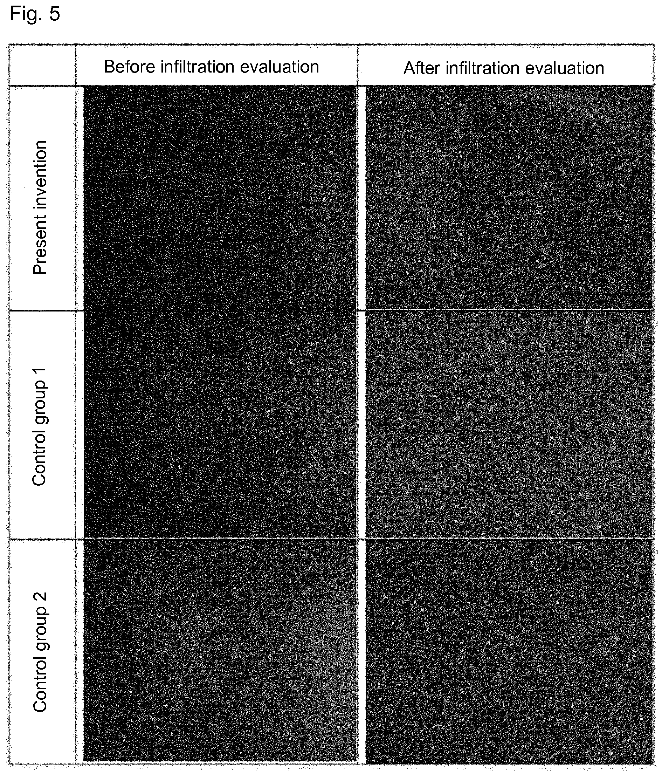

FIG. 5 is photographs showing test results whether a pinhole is formed with respect to an intermediate material for a cooking device, which is formed according to one embodiment of the present invention, and two comparative examples.

The intermediate material for a cooking device formed in accordance with one embodiment of the present invention was formed and used such that a three-layered preformed fluororesin film 10 having an outermost layer of PTFE is thermally compressed on the metal substrate 30 according to the embodiment of FIG. 4. A total thickness of the three-layered preformed fluororesin film is 70 µm. A control group 1 was formed and used such that primer was coated on a metal substrate, fluororesin was spray-coated onto the metal substrate once, and a thickness of the coating film is 20 µm. A control group 2 was formed and used such that primer was coated on a metal substrate, fluororesin was powder coated onto the metal substrate twice, and a thickness of the coating film is 35 µm. A fluorescent dye infiltration method was used as a pinhole formation evaluation method.

Fluorescent dye infiltration evaluation was performed as follows. Fluorescent dye of 200 ml was poured into frying pans, each of which has a diameter of 28 cm, manufactured according to one embodiment of the present invention and two comparative examples, the frying pans were left for about 1 hour while being heated at a temperature of 100 °C, the fluorescent dye was removed, and whether the fluorescent dye infiltrated into the fluororesin layer was inspected by irradiating ultraviolet rays having wavelengths in the range of 330 to 390 nm.

Photographs capturing the presence or absence of pinholes in a state in which the fluorescent dye infiltrated are disposed at an upper portion of FIG. 5. Photographs capturing surfaces of the present invention and the control groups 1 and 2 are sequentially disposed at a lower portion of FIG. 5.

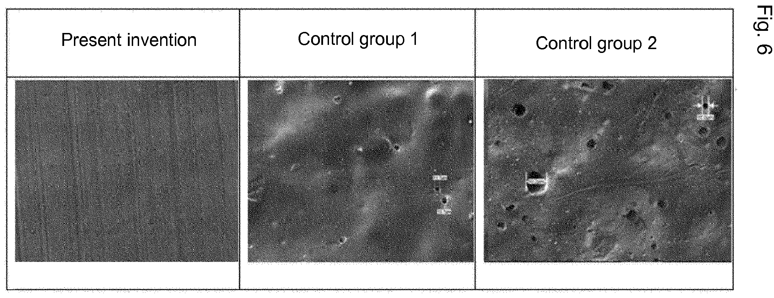

FIG. 6 is photographs in which the surface of the fluororesin layer is enlarged 200 times by electron microscopy to determine whether a pinhole is formed with respect to the intermediate material for a cooking device formed according to one embodiment of the present invention and two comparative examples.

As a result, as apparently shown in FIGS. 5 and 6, it can be seen that excellent pinhole suppression performance was exhibited in the cooking device formed according to the present invention compared with the control groups 1 and 2.

### [Description of Reference Numerals]

10: fluororesin film
11: first layer of fluororesin film
12: second layer of fluororesin film
13: third layer of fluororesin film
20: supporter
30: metal substrate

## Claims

1. A method for producing an intermediate material for a cooking device, the method comprising:
preforming a multilayered fluororesin film (10) by repeating applying and firing an aqueous dispersion of fluororesin and an inorganic filler or an aqueous dispersion of fluororesin onto a supporter (20) to form the multilayered fluororesin film (10) and exfoliating the formed multilayered fluororesin film (10) from the supporter (20);
providing the preformed fluororesin film (10) on a metal substrate (30); and
thermally compressing the preformed fluororesin film (10) and the metal substrate (30),
wherein an organic compound-containing primer or adhesive is not used in the thermally compressing, and
the preforming of the multilayered fluororesin film (10) includes:
coating and firing an aqueous dispersion of a mixture of fluororesin having excellent flowability and polytetrafluoroethylene (PTFE) onto the supporter (20) as a first layer;
coating and firing an aqueous dispersion of a mixture of one or more among PTFE, tetrafluoroethylene-hexafluoropropylene copolymer (FEP), tetrafluoroethylene-perfluoroalkyl vinyl ether (PFA), tetrafluoroethylene-perfluoropropyl vinyl ether copolymer (TFM), and polytetrafluoroethylene-perfluoromethyl vinyl ether copolymer (MFA), and a mixture of an inorganic filler having a content of 5 to 50% by volume as a second layer; and
coating and firing an aqueous dispersion of a mixture of PTFE and an inorganic filler having a content of 25% or less by volume as a third layer.

2. The method of claim 1, wherein the coating of the fluororesin aqueous dispersion includes dipping the supporter (20), wherein the fluororesin aqueous dispersion is coated on both surfaces of the supporter (20) by dipping.

3. The method of claim 2, wherein the thermally compressing performs compression while heating a flat-type press plate.

4. The method of claim 2, wherein the thermally compressing performs compression while heating a press including two rollers.

5. The method of claim 3, wherein the flat-type press plate is heated to maintain a temperature in a range of 300 °C to 410 °C and a pressure in a range of 100 psi and 800 psi is applied.

6. The method of claim 4, wherein the two rollers of the press are respectively heated to maintain a temperature in a range of 330 °C to 420 °C, and a pressure in a range of 2 MPa to 15 MPa is applied, and a line speed in a range of 0.2 to 5 m/min is applied.

7. An intermediate material for a cooking device produced according to the method of producing an intermediate material for a cooking device according to one of claims 1 to 6.
